# EUROPEAN PATENT APPLICATION

(11) **EP 4 299 228 A2**
(43) Date of publication of application: **03.01.2024**
(21) Application number: 23210440.6
(22) Date of filing: 12.11.2014
(51) Int. Cl.: B23K 9/10

(54) **CONSUMABLE CARTRIDGE FOR A PLASMA ARC CUTTING SYSTEM AND ASSOCIATED METHOD**

(30) Priority: 13.11.2013 US 201314079163
(62) Divisional of application: 18192362.4
(71) Applicant: Hypertherm, Inc., Hanover, NH 03755 (US)
(72) Inventor: Brine, Erik, Hanover, 03755 (US); Roberts, Jesse A., Cornish, 03745 (US); Mao, Junsong, Hanover, 03755 (US); Hoffa, Michael, Lebanon, 03766 (US); Gould, Clayton, Orford, 03777 (US); Twarog, Peter J., Meriden, 03770 (US); Shipulski, E. Michael, Etna, 03750 (US); Liebold, Stephen M., Grantham, 03753 (US); Hansen, Brett A., Mapleton, 84664 (US)
(74) Representative: Barker Brettell LLP

(57) **Abstract**

The invention features methods and apparatuses for establishing operational settings of a plasma arc cutting system automatically using replaceable cartridges. A replaceable cartridge for use with a plasma arc cutting system includes a housing, a connection mechanism for coupling the housing to a plasma arc torch, an arc constrictor connected to the housing, an arc emitter connected to the housing, and an identification mechanism disposed relative to the housing and configured to communicate information to a reader of the plasma arc cutting system and automatically set at least one operating parameter of the plasma arc cutting system.

## Description

### FIELD OF THE INVENTION

The invention relates generally to the field of plasma arc cutting systems and processes. More specifically, the invention relates to methods and apparatuses for simplifying cutting tasks by automatically establishing cutting parameters of plasma arc cutting systems using consumable cartridges.

### BACKGROUND

Plasma arc torches are widely used in the cutting and marking of materials. A plasma torch generally includes an arc emitter (e.g. an electrode) and an arc constrictor (e.g. a nozzle) having a central exit orifice mounted within a torch body, electrical connections, passages for cooling, and passages for arc control fluids (e.g., plasma gas). The torch produces a plasma arc, a constricted ionized jet of a gas with high temperature and high momentum. Gases used in the torch can be non-reactive (e.g., argon or nitrogen) or reactive (e.g., oxygen or air). During operation, a pilot arc is first generated between the arc emitter (cathode) and the arc constrictor (anode). Generation of the pilot arc can be by means of a high frequency, high voltage signal coupled to a DC power supply and the torch or by means of any of a variety of contact starting methods.

Known plasma cutting systems include a large array of consumables for use with different cutting currents and/or operating modes. The large number of consumable options can confuse users and create the possibility of using incorrect consumables. The large number of consumable options can also cause torch setup time to be lengthy and can make it difficult to transition between cutting processes that require different arrangements of consumables. Furthermore, even after the appropriate consumable components are selected, the power supply must be configured with cutting parameters (e.g. values for cutting current, gas flow rate and/or operating mode) that are appropriate for the consumables chosen.

### SUMMARY OF THE INVENTION

The present invention addresses the unmet need for a plasma arc cutting system that simplifies the consumable selection process through the use of cartridges including consumables appropriate for a particular cutting task. The present invention also addresses the unmet need for a system that automatically establishes appropriate cutting parameters for the cutting task based upon the cartridge installed.

The present invention relates to systems and methods for establishing in a plasma arc cutting system, through installation of a consumable cartridge in a plasma arc cutting torch, at least one cutting parameter for the plasma arc cutting system (e.g. a cutting current, a gas pressure or gas flow rate, and/or an operational mode for the plasma arc cutting system). The present invention, in one detailed embodiment, enables appropriate cutting parameters for the plasma arc cutting system to be set with minimal action by the system operator (e.g., through installation of a cartridge). A cartridge has a housing, a connection mechanism for coupling the cartridge to a plasma arc torch, and components including at least an arc constrictor (e.g. a nozzle) and an arc emitter (e.g. an electrode), and optionally including a swirl ring or swirling feature, a shield, and/or a retaining cap. The cartridge also has an identification mechanism including information used to configure the plasma arc cutting system for a particular cutting task (e.g. a wireless identification mechanism such as a radio frequency identification (RFID) tag). The plasma arc cutting system has a reader (e.g. a RFID reader) for reading the information and permitting the plasma arc cutting system to be configured with appropriate cutting parameters based on the information read.

In one aspect, the invention features a replaceable cartridge for use with a plasma arc cutting system. The cartridge includes a housing. The cartridge includes a connection mechanism for coupling the housing to a plasma arc torch. The cartridge includes an arc constrictor connected to the housing. The cartridge includes an arc emitter connected to the housing. The cartridge includes an identification mechanism disposed relative to the housing. The identification mechanism is configured to communicate information to a reader of the plasma arc cutting system and automatically set at least one operating parameter of the plasma arc cutting system.

In some embodiments, the identification mechanism is a radio frequency identification (RFID) mechanism. In some embodiments, the identification mechanism is a spring. In some embodiments, the identification mechanism is based on a dimension of an opening of the arc constrictor. In some embodiments, the at least one operating parameter includes at least one of a cutting current, a pilot arc current, a plasma gas flow or a shield gas flow. In some embodiments, the at least one operating parameter is further adjusted at a specified time during a cutting operation.

In some embodiments, the information comprises at least one operating parameter for the plasma arc cutting system. In some embodiments, the information denotes a cartridge type of the cartridge. In some embodiments, the cartridge type corresponds to a cutting persona of the plasma arc cutting system. In some embodiments, the information enables multiple operating parameters of the plasma arc cutting system to be set automatically.

In some embodiments, the cartridge includes a shield. In some embodiments, the cartridge includes a swirling feature or a swirl ring. In some embodiments, the cartridge includes a retaining cap. In some embodiments, the cartridge includes an exterior surface with a visual indicia corresponding to the cartridge type. In some embodiments, the visual indicia is a color. In some embodiments, the cartridge type corresponds to at least one of a workpiece thickness, a current output or a cutting process type.

In another aspect, the invention features a method for operating a plasma arc cutting system. The method includes installing a cartridge in a plasma arc cutting torch. The cartridge includes an arc constrictor, an arc emitter and an identification mechanism. The method also includes communicating information between the identification mechanism and a reader of the plasma arc cutting system. The method also includes setting at least one operating parameter of the plasma arc cutting system based on the communicated information.

In some embodiments, the identification mechanism is a RFID mechanism. In some embodiments, the identification mechanism is a spring. In some embodiments, the identification mechanism is based on a dimension of an opening of the arc constrictor. In some embodiments, the information comprises at least one operating parameter for the plasma arc cutting system. In some embodiments, the information denotes a cartridge type of the cartridge. In some embodiments, the cartridge type corresponds to a cutting persona of the plasma arc cutting system.

In some embodiments, setting at least one operating parameter of the plasma arc cutting system further comprises correlating the information with at least one operating parameter of the plasma arc cutting system via a lookup table. In some embodiments, the at least one operating parameter includes at least one of a cutting current, a pilot arc current, a plasma gas flow or a shield gas flow. In some embodiments, the plasma arc cutting system sets multiple operating parameters based on a particular combination of consumable components of the cartridge.

In some embodiments, the method includes installing a different cartridge in the plasma arc torch. The different cartridge includes a different arc constrictor, a different arc emitter, and a different identification mechanism. In some embodiments, the method includes communicating different information between the different identification mechanism and a reader of the plasma arc cutting system. In some embodiments, the method includes setting at least one different operating parameter of the plasma arc cutting system based on the communicated different information.

In another aspect, the invention features a plasma arc cutting system. The plasma arc cutting system includes a power supply for supplying a cutting current. The plasma arc cutting system also includes a plasma arc cutting torch in electrical communication with the power supply. The plasma arc cutting system also includes a detection mechanism. The plasma arc cutting system also includes a cartridge comprising an arc emitter, an arc constrictor, and an identification mechanism for providing information to the plasma arc cutting system via communication between the identification mechanism and the detection mechanism. The cartridge also includes a means for setting at least one operating parameter of the plasma arc cutting system based on the information communicated between the identification mechanism and the detection mechanism.

In some embodiments, the identification mechanism is a RFID device. In some embodiments, the information communicated between the identification mechanism and the detection mechanism comprises at least one operating parameter of the plasma arc cutting system. In some embodiments, the at least one operating parameter includes at least one of a cutting current, a pilot arc current, a plasma gas flow or a shield gas flow. In some embodiments, the information communicated between the identification mechanism and the detection mechanism denotes a cartridge type of the cartridge. In some embodiments, the cartridge type corresponds to a cutting persona of the plasma arc cutting system. In some embodiments, the information communicated between the identification mechanism and the detection mechanism comprises or is correlated with a workpiece thickness. In some embodiments, the information is communicated to the power supply. In some embodiments, the means for setting at least one operating parameter of the plasma arc cutting system includes the power supply. In some embodiments, the plasma arc cutting system establishes multiple operating parameters system based on a particular combination of consumable components of the cartridge.

The invention provides, inter alia, the subject matter of the following clauses:
1. A replaceable cartridge for use with a plasma arc cutting system, the cartridge comprising:
   a housing;
   a connection mechanism for coupling the housing to a plasma arc torch;
   an arc constrictor connected to the housing;
   an arc emitter connected to the housing; and
   an identification mechanism disposed relative to the housing and configured to communicate information to a reader of the plasma arc cutting system and automatically set at least one operating parameter of the plasma arc cutting system.
2. The cartridge of clause 1 wherein the identification mechanism is a radio frequency identification (RFID) mechanism.
3. The cartridge of clause 1 wherein the identification mechanism is a spring.
4. The cartridge of clause 1 wherein the identification mechanism is based on a dimension of an opening of the arc constrictor.
5. The cartridge of clause 1 wherein the at least one operating parameter includes at least one of a cutting current, a pilot arc current, a plasma gas flow or a shield gas flow.
6. The cartridge of clause 5 wherein the at least one operating parameter is further adjusted at a specified time during a cutting operation.
7. The cartridge of clause 1 wherein the information comprises at least one operating parameter for the plasma arc cutting system.
8. The cartridge of clause 1 wherein the information denotes a cartridge type of the cartridge.
9. The cartridge of clause 8 wherein the cartridge type corresponds to a cutting persona of the plasma arc cutting system.
10. The cartridge of clause 1 wherein the information enables multiple operating parameters of the plasma arc cutting system to be set automatically.
11. The cartridge of clause 1, further comprising a shield.
12. The cartridge of clause 1, further comprising a swirling feature or a swirl ring.
13. The cartridge of clause 1, further comprising a retaining cap.
14. The cartridge of clause 8, further comprising an exterior surface with a visual indicia corresponding to the cartridge type.
15. The cartridge of clause 14 wherein the visual indicia is a color.
16. The cartridge of clause 8 wherein the cartridge type corresponds to at least one of a workpiece thickness, a current output or a cutting process type.
17. A method for operating a plasma arc cutting system, the method comprising:
   installing a cartridge in a plasma arc cutting torch, the cartridge comprising an arc constrictor, an arc emitter and an identification mechanism;
   communicating information between the identification mechanism and a reader of the plasma arc cutting system; and
   setting at least one operating parameter of the plasma arc cutting system based on the communicated information.
18. The method of clause 17 wherein the identification mechanism is a RFID mechanism.
19. The method of clause 17 wherein the identification mechanism is a spring.
20. The method of clause 17 wherein the identification mechanism is based on a dimension of an opening of the arc constrictor.
21. The method of clause 17 wherein the information comprises at least one operating parameter for the plasma arc cutting system.
22. The method of clause 17 wherein the information denotes a cartridge type of the cartridge.
23. The method of clause 17 wherein the cartridge type corresponds to a cutting persona of the plasma arc cutting system.
24. The method of clause 17 wherein setting at least one operating parameter of the plasma arc cutting system further comprises correlating the information with at least one operating parameter of the plasma arc cutting system via a lookup table.
25. The method of clause 17 wherein the at least one operating parameter includes at least one of a cutting current, a pilot arc current, a plasma gas flow or a shield gas flow.
26. The method of clause 17 wherein the plasma arc cutting system sets multiple operating parameters based on a particular combination of consumable components of the cartridge.
27. The method of clause 16 further comprising:
   installing a different cartridge in the plasma arc torch, the different cartridge comprising a different arc constrictor, a different arc emitter, and a different identification mechanism;
   communicating different information between the different identification mechanism and a reader of the plasma arc cutting system; and
   setting at least one different operating parameter of the plasma arc cutting system based on the communicated different information.
28. A plasma arc cutting system comprising:
   a power supply for supplying a cutting current;
   a plasma arc cutting torch in electrical communication with the power supply;
   a detection mechanism;
   a cartridge comprising an arc emitter, an arc constrictor, and an identification mechanism for providing information to the plasma arc cutting system via communication between the identification mechanism and the detection mechanism; and
   a means for setting at least one operating parameter of the plasma arc cutting system based on the information communicated between the identification mechanism and the detection mechanism.
29. The plasma arc cutting system of clause 28 wherein the identification mechanism is a RFID device.
30. The plasma arc cutting system of clause 28 wherein the information communicated between the identification mechanism and the detection mechanism comprises at least one operating parameter of the plasma arc cutting system.
31. The plasma arc cutting system of clause 30 wherein the at least one operating parameter includes at least one of a cutting current, a pilot arc current, a plasma gas flow or a shield gas flow.
32. The plasma arc cutting system of clause 28 wherein the information communicated between the identification mechanism and the detection mechanism denotes a cartridge type of the cartridge.
33. The plasma arc cutting system of clause 32 wherein the cartridge type corresponds to a cutting persona of the plasma arc cutting system.
34. The plasma arc cutting system of clause 28 wherein the information communicated between the identification mechanism and the detection mechanism comprises or is correlated with a workpiece thickness.
35. The plasma arc cutting system of clause 28 wherein the information is communicated to the power supply.
36. The plasma arc cutting system of clause 28 wherein the means for setting at least one operating parameter of the plasma arc cutting system comprises the power supply.
37. The plasma arc cutting system of clause 28 wherein the plasma arc cutting system establishes multiple operating parameters system based on a particular combination of consumable components of the cartridge.

### BRIEF DESCRIPTION OF THE DRAWINGS

The foregoing discussion will be understood more readily from the following detailed description of the invention when taken in conjunction with the accompanying drawings.
Figures 1A-1B are cross-sectional illustrations of cartridges for a plasma arc cutting system, according to an illustrative embodiment of the invention.
Figure 2 is a schematic of a plasma arc cutting system, according to an illustrative embodiment of the invention.
Figures 3A-3C are illustrations of exterior views of cartridges for a plasma arc cutting system, according to an illustrative embodiment of the invention.
Figure 4 is a flow diagram of a method of detecting a cartridge in a plasma arc cutting torch of a plasma arc cutting system and setting cutting parameters for a plasma arc cutting system, according to an illustrative embodiment of the invention.

### DETAILED DESCRIPTION OF THE DRAWINGS

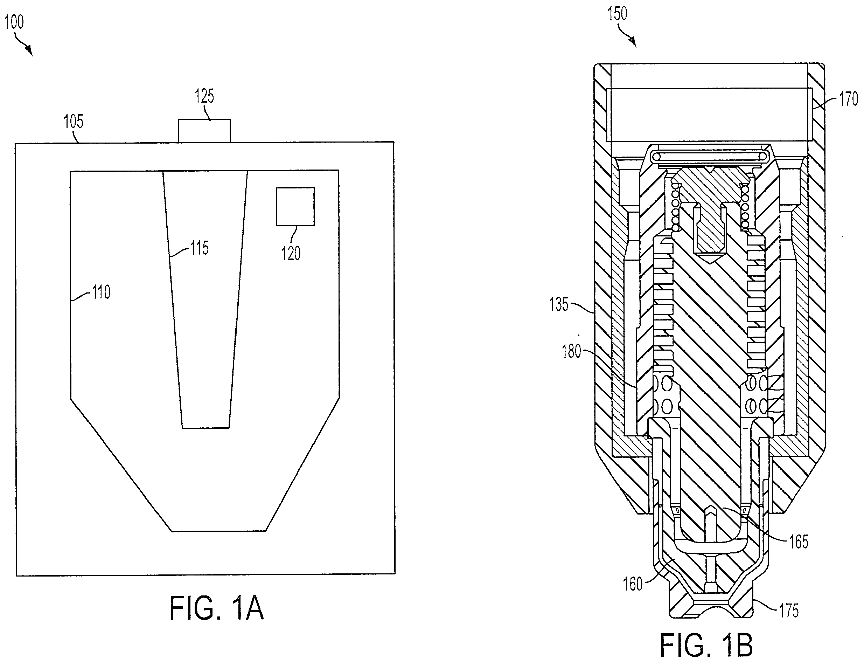

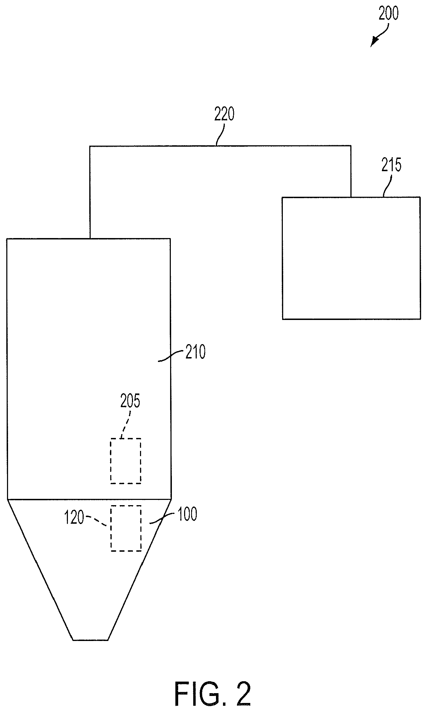

Figures 1A-1B are cross-sectional illustrations of cartridges 100, 150 for a plasma arc cutting system (e.g. plasma arc cutting system 200 as shown below in Figure 2), according to an illustrative embodiment of the invention. Figure 1A shows a cartridge 100 that includes a housing 105, a arc constrictor 110, an arc emitter 115, and an identification mechanism 120. The arc constrictor 110, the arc emitter 115, and/or the identification mechanism 120 can be disposed within the housing 105. The cartridge 100 can have a connection mechanism 125 for coupling the cartridge 100 to a plasma arc torch (e.g. plasma arc torch 210 as shown below in Figure 2). Figure 1B shows a cartridge 150 that includes a housing 135, an arc constrictor 160, an arc emitter 165, and an identification mechanism 170.

In some embodiments the cartridge 150 includes one or more of the following additional components: a shield 175; a swirling feature 180; and/or a retaining cap (not shown). In some embodiments, the arc constrictor 110, 160 includes a nozzle. In some embodiments the arc emitter 115, 165 includes an electrode. In some embodiments the geometry of an orifice of the arc constrictor 110, 160 and/or the geometry of the swirling feature 180 is optimized for a particular cutting or gouging process. In some embodiments a hafnium emitter of the arc emitter 115, 165 can be optimized for a specific cutting or gouging process. In some embodiments, the housing 105 includes any component that holds the cartridge 100, 150 together, e.g. a nozzle body, swirl ring or separate element. In some embodiments, the connection mechanism 125 is a magnet, a thread, a lip, a latch, or any other mechanism capable of attaching the cartridge 150 to a torch (not shown). In some embodiments, the connection mechanism 125 is a retaining cap.

The identification mechanism 120, 170 includes information that can be communicated to a reader of a plasma arc cutting system (e.g. reader 205 as shown below in Figure 2). The plasma arc cutting system then can use the information to automatically set at least one operating parameter of the plasma arc cutting system, as described below in Figure 2.

Figure 2 is a schematic of a plasma arc cutting system 200, according to an illustrative embodiment of the invention. The plasma arc cutting system 200 includes a cartridge 100, a plasma arc torch 210 and a plasma power supply 215. The plasma arc torch 210 is in electrical communication with the plasma power supply 215 via electrical connection 220. The plasma arc torch 210 includes a detection mechanism 205 configured to read information provided by identification mechanism 120.

When the cartridge 100 is installed in the plasma arc torch 210, the detection mechanism 205 reads the information contained in the identification mechanism 205 and passes the information to the plasma power supply 215. In some embodiments, the detection mechanism 205 sends a signal to the plasma power supply 215, e.g. via electrical connection 220. In some embodiments the detection mechanism 205 sends a signal to the power supply wirelessly. The plasma power supply 215 then configures at least one operating parameter of the plasma arc cutting system 200 based on the information read. For example, the plasma power supply 215 can configure the operating current, the gas pressure, current controls (e.g. continuous pilot arc), and/or gas controls (e.g. gas ramping) based on the information read. The system is thus configured automatically without the need for further action by the operator.

In some embodiments, the identification mechanism 120 includes information that identifies the type of cartridge 100 installed. The cartridge type can be correlated with a certain cutting task for which (i) a particular combination of consumables contained in the cartridge 100 is best suited, and/or (ii) particular plasma system settings are best suited. For example, for the task of cutting fine features in sheet metal, it would be appropriate to use a cartridge containing a relatively small arc constrictor orifice with features capable of imparting a high swirling gas strength that configured the plasma arc cutting system 200 with a lower cutting current appropriate to the arc constrictor orifice size and a moderate gas flow. As another example, for the task of gouging a thick, heavy plate of steel, it would be appropriate to use a cartridge containing a relatively large arc constrictor orifice with features capable of imparting a low swirling gas strength that configured the plasma arc cutting system 200 with a higher cutting current appropriate to the arc constrictor orifice size and a large gas flow to adequately remove the molten steel.

In some embodiments, the information stored by identification mechanism 120 denotes a cartridge type of the cartridge 100. The plasma arc cutting system 200 can use the cartridge type to select appropriate plasma system cutting parameters using a lookup table stored in memory of the plasma power supply 215. For example, if the plasma arc cutting system 200 receives information that cartridge type A is installed, it can use the lookup table to determine that cartridge type A is to be used with a specific cutting current, gas flow rate and/or cutting mode and configure the plasma arc cutting system 200 accordingly. On the other hand, if the plasma arc cutting system 200 receives information that cartridge type B is installed, it can use the lookup table to configure the plasma arc cutting system 200 with a different set of system parameters. In some embodiments, the identification mechanism 120 stores operational parameters for the plasma arc cutting system 200. For example, the identification mechanism can include information comprising specific values for a cutting current, a pilot arc current, a plasma gas flow rate, a shield gas flow rate, and/or cutting mode, or other plasma system parameters. The plasma arc cutting system 200 can then use this information set the specified values. In some embodiments, the identification mechanism 120 can store historical data or performance characteristics of the cartridge. For example, the identification mechanism 120 can include information comprising the number of start cycles, the number of arc-hours, the arc voltage or other data or performance characteristics.

In some embodiments, the identification mechanism 120 is a RFID tag. The RFID tag can store information in the form of digital data. The detection mechanism 205 can be a RFID reader capable of reading the digital data. In some embodiments, the identification mechanism 120 is a physical feature of the cartridge. For example, a keyed type feature on the cartridge can be detected by the plasma arc torch 210. In some embodiments, the identification mechanism 120 is a spring that can be identified according to a spring constant (k). In some embodiments the information of the identification mechanism 120 is based on a voltage change, a blowback pressure, or another feature capable of differentiating multiple consumable cartridges. One of ordinary skill in the art would understand that the information in the identification mechanism can be encoded in a variety of physical forms and interpreted by a variety of corresponding readers suitable for use with a plasma arc cutting system.

In some embodiments, the plasma power supply 215 is a power printed circuit board ("PCB") that can comprise most of the power components. In some embodiments, the plasma power supply 215 includes a controller, e.g. a microcontroller, a central processing unit ("CPU") controller, a digital signal processor ("DSP") controller, or any other type of controller that is capable of controlling the applicable plasma system settings. In some embodiments, the plasma power supply 215 is controlled by a remote controller, for example, a computer numeric controller ("CNC").

Using the current invention, an operator of the plasma arc cutting system 200 needs only to select and install a consumable cartridge 100 based on the specific cutting job desired. System controls can be simplified or removed entirely from the plasma arc cutting system 200, as the operator does not need to configure the power supply settings. Thus, setup time can be greatly reduced. Table 1 shows test results for a novice user for the selection and installation of individual consumables known in the art compared to the selection and installation of a consumable cartridge for specific cutting processes. As shown, the time taken to select the correct consumables for the specific job was substantially shorter using the automated consumable cartridge.

**Table 1:**

| User | Task | Time |
|---|---|---|
| User 1 | Install individual mechanized cutting consumables | 11:50 |
| User 1 | Install mechanized cutting cartridge | 1:13 |
| User 2 | Install individual hand cutting consumables | 8:00 |
| User 2 | Install hand cutting cartridge | 2:07 |

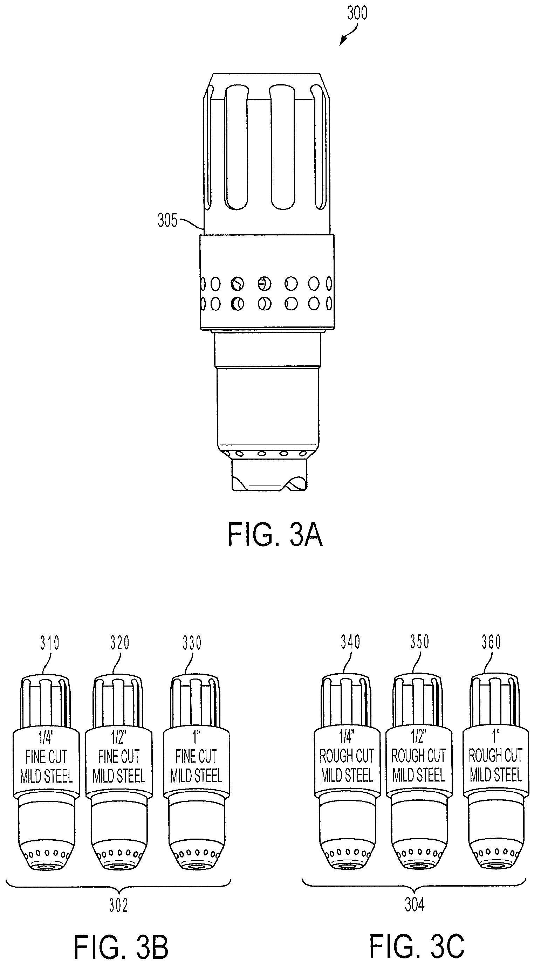

Figures 3A-3C are illustrations of exterior views of cartridges 300, 310, 320, 330, 340, 350, 360 for a plasma arc cutting system (e.g. plasma arc cutting system 200 as shown above in Figure 2), according to an illustrative embodiment of the invention. Figure 3A shows a cartridge 300 including a housing 305. In some embodiments the cartridges are provided with a visual indicia of the cut to be performed. In some embodiments the cartridges are color coded or labeled with another intuitive indicator of the cut to be performed (e.g. an icon). In some embodiments, cartridges having consumable sets that encompass a range of currents and type of cutting processes can be provided for selection by an operator. In some embodiments the cartridges 300, 310, 320, 330, 340, 350, 360 include an additional retaining cap.

In some embodiments, in addition to being optimized for a particular cutting task, a cartridge may be optimized for a particular thickness of a given workpiece material. For example, Figures 3B-3C each show a set of three consumable cartridges that are optimized for a specific cutting task and are optimized for different workpiece thicknesses. Figure 3B shows a cartridge set 302 that is intended for fine cutting of mild steel. The cartridge 310 is optimized for cutting ¼ inch steel; the cartridge 320 is optimized for cutting ½ inch steel; the cartridge 330 is optimized for cutting 1 inch steel. Figure 3C shows a cartridge set 304 that is intended for rough cutting of mild steel. The cartridge 340 is optimized for cutting ¼ inch steel; the cartridge 350 is optimized for cutting ½ inch steel; the cartridge 360 is optimized for cutting 1 inch steel. For example, for each set of consumable cartridges an arc constrictor (e.g. nozzle) orifice may be sized to cut ¼ inch steel with a cutting current of 60 Amps; sized to cut ½ inch steel with a cutting current of 80 Amps; and/or sized to cut 1 inch steel with a cutting current of 100 Amps.

In some embodiments the consumables cartridges can be designed for each "cutting persona" as described in Application No. 13/949,364, filed on July 24, 2013, the contents of which are incorporated herein by reference. A "cutting persona" is a set of parameters for a plasma arc cutting system that are customized for a particular kind of cut. For example, one user may want to cut as fast as possible and sacrifice consumable life. For this type of cut, a cutting persona that establishes a high current and gas flow can be desirable. Another user, such as one who is using a computer numeric controller ("CNC")-controlled table mounted system, may want to select a cutting persona optimized for long life or fine cutting. For this type of cut, a cutting persona that establishes a low current and/or gas flow rate can be desirable.

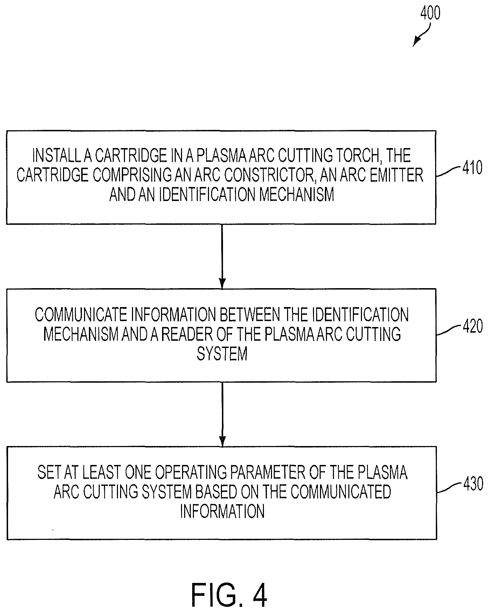

Figure 4 is a flow diagram of a method 400 of detecting a cartridge in a plasma arc cutting torch of a plasma arc cutting system and setting cutting parameters for a plasma arc cutting system, according to an illustrative embodiment of the invention. In a first step 410, a cartridge comprising an arc constrictor, an arc emitter and an identification mechanism is installed in a plasma arc cutting torch. In a second step 420, information is communicated between the identification mechanism and a reader of the plasma arc cutting torch. In a third step 430, at least one operating parameter of a plasma arc cutting system is set based on the communicated information.

While the invention has been particularly shown and described with reference to specific preferred embodiments, it should be understood by those skilled in the art that various changes in form and detail may be made therein without departing from the spirit and scope of the invention as defined by the following claims.

## Claims

1. A consumable cartridge (100, 150, 300) for use with a plasma arc cutting system (200), the cartridge comprising:
a housing (105, 135, 305) including a swirling feature (180);
a connection mechanism (125) for coupling the housing to a plasma arc torch, wherein the connection mechanism comprises at least one of a magnet, a thread, a lip, a latch, or a retaining cap;
a nozzle (110, 160) connected to the housing;
an electrode (115, 165) disposed within the housing; and
an identification mechanism comprising an exterior surface with a visual indica that indicates a type of the cartridge, and wherein the visual indicia correlates to at least one type of cutting process or task;
such that, in use, information from the identification mechanism can be used to configure the plasma arc cutting system for a particular cutting or gouging task.

2. The consumable cartridge of claim 1, wherein the visual indicia is a color.

3. The consumable cartridge of claim 1, wherein the visual indicia is an icon.

4. The consumable cartridge of claim 1, wherein the visual indicia of the consumable cartridge further correlates to at least one of a workpiece thickness or a current output.

5. The consumable cartridge of claim 1, wherein the visual indicia of the consumable cartridge further correlates to a cutting persona of the plasma arc cutting system.

6. The consumable cartridge of claim 1, wherein the housing includes any component that holds the cartridge together.

7. The consumable cartridge of claim 6, wherein the component that holds the cartridge together includes a nozzle body or a swirl ring.

8. The consumable cartridge of claim 1, wherein the cartridge further includes a shield (175) and/or a retaining cap.

9. A method for configuring a plasma arc cutting system (200), the method comprising:
• selecting a consumable cartridge (100, 150, 300) as defined in any one of the preceding claims;
• installing the cartridge in a plasma arc torch (210) of the plasma arc cutting system; and
• using information from the identification mechanism of the consumable cartridge to configure the plasma arc cutting system for a particular cutting or gouging task.

10. The method of claim 9, wherein the cartridges are color coded and the cut to be performed is selected based on the color.

11. The method of claim 9, wherein the cartridges are labeled with an icon and the cut to be performed is selected based on the icon.

12. The method of claim 9, further comprising using information from the identification mechanism of the consumable cartridge that correlates to a workpiece thickness or a current output to configure the plasma arc cutting system.

13. The method of claim 9, further comprising using information from the identification mechanism of the consumable cartridge that correlates to a cutting persona of the plasma arc cutting system to configure the plasma arc cutting system.
